# EUROPÄISCHE PATENTANMELDUNG

(11) **EP 2 179 825 A1**
(43) Veröffentlichungstag der Anmeldung: **28.04.2010**
(21) Anmeldenummer: 09013398.4
(22) Anmeldetag: 23.10.2009
(51) Int. Cl.: B27B 17/00

(54) **Zusatzeinrichtung für eine Kettensäge zur gleichzeitigen Verwendung dieser Kettensäge als Heckenschere**

(30) Priorität: 24.10.2008 DE 102008053042
(71) Anmelder: Limbeck, Achim, 53902 Bad Münstereifel (DE)
(72) Erfinder: Limbeck, Achim, 53902 Bad Münstereifel (DE)

(57) **Zusammenfassung**

Zusatzeinrichtung für eine Kettensäge (1) zur Verwendung der Kettensäge (1) als Heckenschere, die dadurch gekennzeichnet ist, dass sie aus mindestens einem grob zur Kettenlaufrichtung geneigten verzahnten (5), die Kette (2) zumindest teilweise überragendem Formteil (4) aus Metall oder einem gleichwertig geeigneten stabilen Material besteht, das a) entweder seitlich an das Schwert (3) einer handelsüblichen Kettensäge (1) angeordnet werden kann oder das b) ein Schwert (3) für eine Kettensäge (1) ist, welches neben der Kettenaufnahme (2a) ein- oder beidseitig eine integrierte Verzahnung (5) der eingangs genannten Art aufweist,

## Beschreibung

Die vorliegende Erfindung betrifft eine Zusatzeinrichtung für eine Kettensäge zur Verwendung dieser Kettensäge als Heckenschere.

Kettensägen und Heckenscheren sind aus dem Stand der Technik bereits in zahlreichen Ausführungen bekannt. Heckenscheren sind Gartengeräte, die dazu dienen, Hecken zu stutzen oder Gebüsch und feststängelige Pflanzen (Rosen u. ä.) zurückzuschneiden. Hierzu sind an einer feststehenden Leiste rechts und links jeweils eine Reihe feststehender Messer befestigt, deren Abstand (ca. 1,5-3,4 cm) dem maximal zu schneidenden Astdurchmesser entspricht. Darüber wird ein zweiter, ebenfalls mit Messern besetzter Balken hin und her bewegt, so dass die Messer dieses Balkens mit dem Feststehenden eine lange Reihe einzelner Scheren bilden.

Der Nachteil dieser bekannten und getesteten Heckenscheren liegt darin, dass vor allem stärkere Aste nicht problemlos geschnitten werden können. Durch die oben genannten Konstruktionsmerkmale sowie deren Geschwindigkeit und die Schneidwinkel der Messer ist es rein technisch nicht möglich, dass ein Ast von nur einem Zentimeter in einer Zeit von weniger als 1/10 Sek. voll in die gespreizte Schere der Messer eintaucht. Die Folge ist, dass Äste, deren Durchmesser mehr als 5 mm beträgt, von den Spitzen der Messer abgeknabbert werden und dass stärkere Äste nur mit hohem Andruck der Messer gegen den Ast abgeschnitten werden können.

Die Verwendung einer Kettensäge als Heckenschere erweist sich als äußerst schwierig, wenn nicht sogar unmöglich, da die Äste beim Ansetzen der Kettensäge von dem Schwert bzw. der Kette vor allem bedingt durch die Geschwindigkeit der umlaufenden Kette abprallen.

Versuche, eine Kettensäge durch eine Zusatzverzahnung zu einer Heckenschere zu erweitern, scheiterten an der Verzahnung, die in Form und Ausführung der einer normalen Verzahnung von Heckenschweren entsprach. Das heißt, dass die Verzahnung nicht gegen, sondern zum Lauf der Kette geneigt war. Diese Neigung hilft dem abzuschneidenden Ast, aus der Verzahnung zu entweichen, statt ihn davon abzuhalten. Das Ergebnis ist den Herstellern von Kettensägen bekannt, die damit experimentierten. Die Äste werden abgescharbt oder zerknabbert.

Multifunktionssägen, mit denen sowohl Bäume gefällt als auch Hecken geschnitten werden können, sind aus dem Stand der Technik nicht bekannt.

Der vorliegenden Erfindung liegt die Aufgabe zu Grunde, eine Zusatzeinrichtung für eine Kettensäge zu schaffen, die es erlaubt, die Kettensäge neben ihrer natürlichen Funktion als Baumsäge auch als Heckenschere zu verwenden.

Erfindungsgemäß wird die voranstehende Aufgabe mit den Merkmalen des Patentanspruchs 1 gelöst. Vorteilhafte Ausgestaltungen der erfindungsgemäßen. Zusatzeinrichtung sind in Unteransprüchen angegeben.

Danach ist eine Zusatzeinrichtung für eine Kettensäge der eingangs genannten Art **dadurch gekennzeichnet, dass** sie aus mindestens einem grob verzahnten, die Kette zumindest teilweise überragendem Formteil aus Metall oder einem gleichwertig geeigneten stabilen Material besteht,
a) das entweder seitlich an das Schwert einer handelsüblichen Kettensäge kraftschlüssig und/oder formschlüssig angeordnet werden kann
b) oder das ein Schwert für eine Kettensäge ist, welches neben der Kettenaufnahme ein- oder beidseitig eine integrierte Verzahnung der eingangs genannten Art aufweist.

Diese Zusatzeinrichtung kann an dem normalen Schwert einer Kettensäge entweder a) seitlich angeordnet oder b) mit dem normalen Schwert einer Kettensäge ausgetauscht werden, womit die Kettensäge in eine Heckenschere gewandelt wird.

Vorzugsweise sind die an dem Formteil vorgesehenen Verzahnungen derart ausgeformt und gegen die Laufrichtung der Kette geneigt oder in der Weise ausgerichtet, dass abzuschneidende Äste einer Hecke durch den Kettenlauf in die zwischen den Verzahnungen und der Kette gebildeten Einbuchtungen gehalten oder gezogen werden.

Die Verzahnungen können reversibel, versetz- und/oder verschiebbar oder auch irreversibel an dem Formteil ausgebildet und/oder angeordnet sein. Eine reversible und versetzbare Anordnung der Verzahnungen ermöglicht es, die Kettensäge an unterschiedliche Hecken-, Gebüsch-, feststängelige Pflanzen- und Strauchverhältnisse und verschiedenste Aststärken anzupassen.

Der wesentliche und entscheidende Vorteil der vorgeschlagenen Zusatzeinrichtung für Kettensägen besteht darin, dass die Kette immer in eine Richtung läuft und den einmal zwischen der geneigten Verzahnung erfassten Ast, auch wenn dieser einen Durchmesser hat, der gerade noch zwischen die Verzahnungen des Formteils passt, genau so abgeschnitten wird, wie ein sehr dünner Ast. Ein weiterer Vorteil ist die hohe Geschwindigkeit, mit der zum Beispiel eine Hecke beschnitten werden kann, da ein mehrfaches Ansetzen an eine Stelle nicht mehr nötig ist.

Weitere Ziele, Merkmale, Vorteile und Anwendungsmöglichkeiten der Zusatzeinrichtung ergeben sich aus der nachfolgenden Beschreibung mehrerer Ausführungsbeispiele anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen

Fig.1 die erfindungsgemäße Zusatzeinrichtung (Formteil 4) am Schwert 3 einer Kettensäge 1;

Fig.2 die erfindungsgemäße Zusatzeinrichtung ausgebildet als Schwert 3 einer Kettensäge 1.

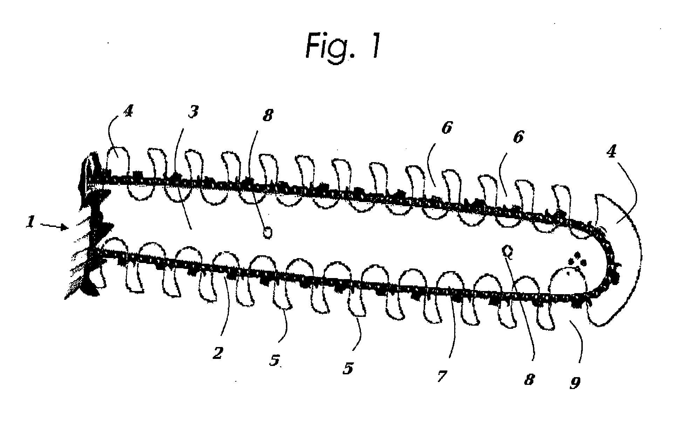

Wie aus Fig.1 ersichtlich, ist das Formteil 4 vorzugsweise einseitig an dem Schwert 3 einer Kettensägen 1 verschraubt oder auf andere bekannte Weise reversibel oder irreversibel (zum Beispiel mittels Nieten kraftschlüssig) angebracht. Der Vorteil dieser Anordnung besteht darin, dass Schwerter 3 gängiger Kettensägen 1 in der Regel bereits mindestens eine entsprechende Öffnung 7 aufweisen. Insofern ließe sich die Zusatzeinrichtung auch hervorragend als Nachrüstset anbieten. Der Vorteil dieser Einrichtung besteht außerdem in seinem günstigen Preis. Wer bereits eine Kettensäge 1 besitzt, benötigt nur die Zusatzeinrichtung mit den Schrauben zur Befestigung des Formteils 1 an dem Schwert 3 der Kettensäge 1. Wer sich eine neue Kettensäge 1 kauft, kann sie inkl. Zusatzeinrichtung als Multifunktionssäge erwerben. Darüber hinaus sind aber auch andere Ausgestaltungsmöglichkeiten denkbar. So könnte das Formteil 4 aus Stabilitätsgründen auch breiter ausgestaltet sein und beidseitig über das Schwert gestülpt werden.

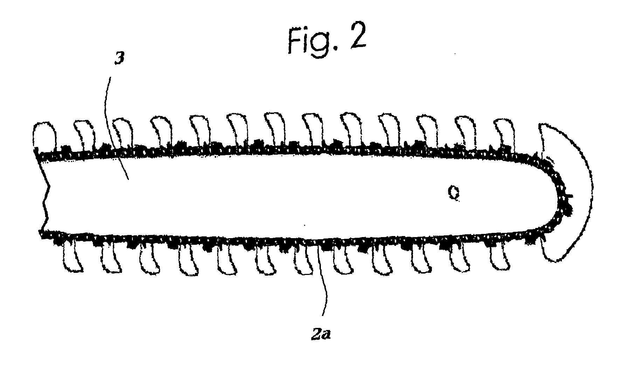

In einer weiteren vorteilhaften Ausführungsform könnte das Formteil 4 - wie Fig.2 zeigt - ferner auch als Schwert 3 selbst ausgebildet sein, welches dann bei der Verwendung der Kettensäge 1 als Heckenschere komplett ausgetauscht wird. So könnte die Kettensäge 1 beim Verkauf mit zwei austauschbaren Zusatzeinrichtungen bzw. Schwertern 3 (mit und ohne Verzahnungen) ausgeliefert werden.

Vorzugsweise sind die Verzahnungen 5 in das Formteil 4 gestanzt, geschnitten oder auf andere bekannte Weise in das Formteil 4 eingeformt. In einer anderen Ausführung sind zahlreiche Verzahnungen 5 an dem Formteil 4 angebracht, zum Beispiel angeschweißt oder auf sonstige Weise reversibel oder irreversibel an dem Formteil 4 befestigt.

Die Länge und Breite der einzelnen Verzahnungen 5 sind vorzugsweise so gestaltet, dass ausreichend Platz entsteht, um einen Ast in dem Durchmesser aufnehmen zu können, für den die Heckenschere ausgelegt ist. Entsprechend der Zahnabstände ist das Formteil 4 zwischen den einzelnen Verzahnungen 5 vorzugsweise in der ersten Ausführung noch Fig.1 unterhalb der Kette ausgespart, damit der abzuschneidende Ast nicht auf der Aussparung 8 des Formteils 4 aufliegt, bevor die Kette 2 den Ast abgesägt hat.

Wie aus den Fign.1,2 ersichtlich, kann der fordere Teil des Formteils 4 vorteilhafterweise nicht verzahnt sein, damit es das Schwert 3 und die Kette 2 beim Beschneiden einer Hecke im Erdbereich schützt. Die Abstände und die Größe der Verzahnungen 5 können weitestgehend gleich sein, allerdings sind hier auch Variationen bezüglich der Abstände und der Abmessung der einzelnen Verzahnungen denkbar. So können - wie Fig.1 veranschaulicht - auch eine oder auch mehrere Einbuchtungen 9 größere Weiten als die übrigen aufweisen. Dies gewährleistet, dass unabhängig von der Zusatzeinrichtung auch größere Äste entfernt werden können.

Auch bezüglich der Ausrichtung der einzelnen Verzahnungen 5 sind unterschiedliche Ausführungen denkbar. In der Praxis hat sich nur die aus den Fign.1,2 ersichtliche Ausrichtung entgegen der Kettenlaufrichtung bewährt.

An ihren äußeren Enden können die Verzahnungen 5 rund, eckig oder auch spitz ausgebildet sein.

Die erfindungsgemäße Zusatzeinrichtung für eine Kettensäge 1 beschränkt sich in ihrer Ausführung nicht auf die vorstehend angegebenen bevorzugten Ausführungsformen. Vielmehr sind eine Vielzahl von Ausgestaltungsvarlationen denkbar, welche von der dargestellten Lösung auch bei grundsätzlich anders gearteter Ausführung Gebrauch machen.

### Liste der Bezugsziffern

- 1: Kettensäge
- 2: Kette
- 2a: Kettenaufnahme
- 3: Schwert
- 4: Formteil
- 5: Verzahnung
- 6: Einbuchtungen
- 7: Aussparrungen
- 8: Öffnungen mit Schraubverbindung
- 9: größere Einbuchtungen

## Patentansprüche

1. Zusatzeinrichtung für eine Kettensäge (1) zur Verwendung der Kettensäge (1) als Heckenschere,
**dadurch gekennzeichnet,**
**dass** sie aus mindestens einem zur Kettenlaufrichtung geneigten grob verzahnten (5), die Kette (2) zumindest teilweise überragendem Formteil (4) aus Metall oder einem gleichwertig geeigneten stabilen Material besteht,
a) das entweder seitlich an das Schwert (3) einer handelsüblichen Kettensäge (1) kraftschlüssig und/oder formschlüssig angeordnet werden kann
b) oder das ein Schwert (3) für eine Kettensäge (1) ist, welches neben der Kettenaufnahme (2a) ein- oder beidseitig eine integrierte Verzahnung (5) der eingangs genannten Art aufweist.

2. Zusatzeinrichtung nach Anspruch 1,
**dadurch gekennzeichnet,**
**dass** die an dem Formteil (4) vorgesehenen Verzahnungen (5) derart ausgeformt und gegen die Laufrichtung der Kette (2) in der Weise ausgerichtet sind, dass abzuschneidende Äste einer Hecke durch den Kettenlauf in die zwischen den verzahnungen (5) und der Kette (2) gebildeten Einbuchtungen (6) gezogen und gehalten werden.

3. Zusatzeinrichtung nach den Ansprüchen 1 und 2,
**dadurch gekennzeichnet,**
**dass** die Verzahnungen (5) reversibel, versetz- und/oder verschiebbar an dem Formteil (4) ausgebildet und/oder angeordnet sind.

4. Zusatzeinrichtung nach einem oder mehreren der vorangegangenen Ansprüche,
**dadurch gekennzeichnet,**
**dass** entsprechend der Zahnabstände das Formteil (4) zwischen den einzelnen Verzahnungen (5) unterhalb der Kette (2) so ausgespart ist, dass der abzuschneidende Ast nicht auf der Aussparung des Formteils (4) aufliegt, bevor die Kette (2) den Ast abgesägt hat.

5. Zusatzeinrichtung nach einem oder mehreren der vorangegangenen Ansprüche,
**dadurch gekennzeichnet,**
**dass** das Formteil (4) beidseitig an das Schwert angebracht wird.

6. Zusatzeinrichtung nach einem oder mehreren der vorangegangenen Ansprüche,
**dadurch gekennzeichnet,**
**dass** der fordere Teil des Formteils (4) nicht verzahnt ist, damit es das Schwert (3) und die Kette (2) beim Beschneiden einer Hecke im Erdbereich schützt.

7. Zusatzeinrichtung nach einem oder mehreren der vorangegangenen Ansprüche,
**dadurch gekennzeichnet,**
**dass** zumindest eine Einbuchtung (9) größere Weiten aufweist als die übrigen (6).

8. Zusatzeinrichtung nach einem oder mehreren der vorangegangenen Ansprüche,
**dadurch gekennzeichnet,**
**dass** das Formteil (4) an beiden Seiten eine Verzahnung aufweist, damit das Schwert der Kettensäge oben und unten genutzt werden kann.
